(19) Europäisches Patentamt
European Patent Office
Office européen des brevets

(11) **EP 3 330 037 B1**

(12) **EUROPÄISCHE PATENTSCHRIFT**

(45) Veröffentlichungstag und Bekanntmachung des Hinweises auf die Patenterteilung:
**18.11.2020   Patentblatt 2020/47**

(51) Int Cl.:
***B23K 26/06*** *(2014.01)*        ***B23K 26/08*** *(2014.01)*

(21) Anmeldenummer: **17203658.4**

(22) Anmeldetag: **17.03.2008**

(54) **VERFAHREN UND VORRICHTUNG ZUR WERKSTÜCKBEARBEITUNG**

METHOD AND DEVICE FOR PROCESSING WORKPIECES

PROCÉDÉ ET DISPOSITIF D'USINAGE DE PIÈCES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **16.03.2007   DE 102007012815**

(43) Veröffentlichungstag der Anmeldung:
**06.06.2018   Patentblatt 2018/23**

(62) Dokumentnummer(n) der früheren Anmeldung(en) nach Art. 76 EPÜ:
**08716574.2 / 2 136 957**

(73) Patentinhaber: **Sauer GmbH Lasertec**
**87459 Pfronten (DE)**

(72) Erfinder:
• **Kuhl, Michael**
**87629 Füssen (DE)**
• **Hildebrand, Peter**
**87459 Pfronten (DE)**
• **Reisacher, Martin**
**87435 Kempten (DE)**

(74) Vertreter: **Beetz & Partner mbB**
**Patentanwälte**
**Robert-Koch-Str. 1**
**80538 München (DE)**

(56) Entgegenhaltungen:
WO-A-98/27450        WO-A-2004/105996
US-A1- 2005 069 000        US-A1- 2005 237 895

**Beschreibung**

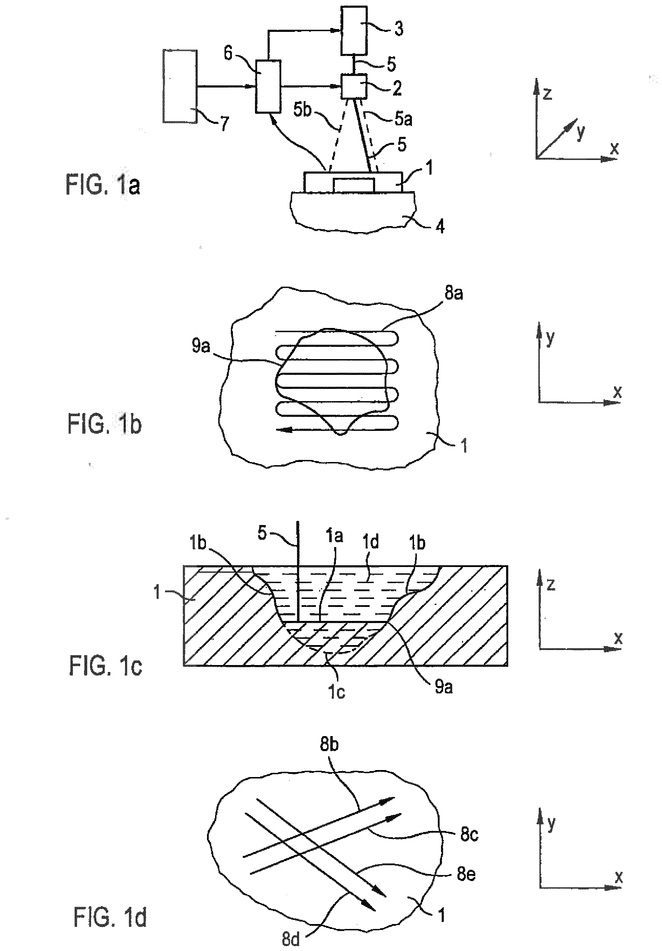

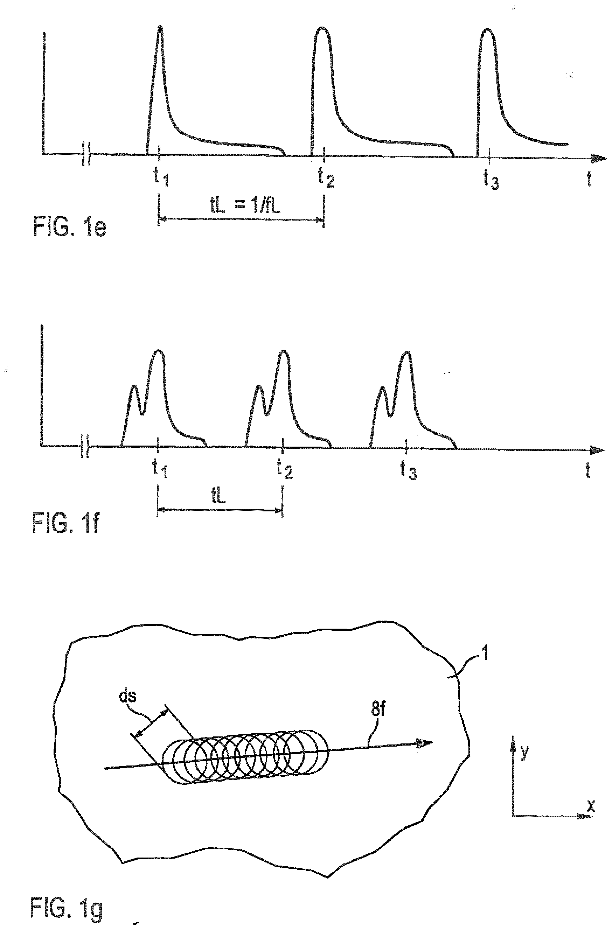

Die Erfindung betrifft ein Verfahren und eine Vorrichtung zur Bildung eines Gesenks in einem Werkstück mittels eines pulsierenden Laserstrahls. Figur 1 zeigt bekannte Merkmale bei der Werkstückbearbeitung mittels Laserstrahls. Ein Verfahren und eine Vorrichtung zur Herstellung eines Gesenks sind der WO2004/105996 zu entnehmen.

Figur 1a zeigt schematisch eine Laserbearbeitungsvorrichtung in Seitenansicht. 1 ist das Werkstück. 4 stellt den Werkstücktisch dar, auf dem das Werkstück 1 angebracht ist. 5 symbolisiert den bearbeitenden Laserstrahl, der in einem bestimmten Bereich durch eine Strahlführung 2 geführt wird. 3 ist die Laserlichtquelle, die Laserlicht aussendet, wobei das Laserlicht dann in die Strahlführung 2 läuft und von dieser auf das Werkstück 1 gerichtet wird. 6 symbolisiert eine Steuerung/Regelung, die Prozessdaten empfangen kann und die mindestens die Strahlführung 2 und die Laserquelle 3 ansteuert. Sie kann mit einer höherrangigen Steuerung/Regelung 7 verbunden sein. Sie kann je nach Auslegung auch selbst hochrangige Steueraufgaben wahrnehmen und kann mit einem Speicher 7 verbunden sein, der beispielsweise Gesenkdaten oder Fertigungsdaten hält, nach deren Maßgabe das Werkstück 1 zu bearbeiten ist.

Schematisch angedeutet ist ein Koordinatensystem: die x-Richtung läuft waagrecht in der Zeichenebene, die z-Richtung senkrecht in der Zeichenebene und die y-Richtung senkrecht zur Zeichenebene nach hinten weg.

Die Vorrichtung der Fig. 1a kann sowohl zur Gesenkbildung durch flächigen, schichtweisen Materialabtrag verwendet werden als auch zur Oberflächenbearbeitung, bei der nicht primär der voluminöse Abtrag interessiert, sondern vorranging die Schaffung bestimmter Oberflächeneigenschaften. Dies kann innerhalb weniger Durchläufe (Schichten) erreicht werden. Im Extremfall ist nur ein einmaliges Überstreichen der jeweils zu bearbeitenden Oberflächenpunkte (in x-/y-Richtung) notwendig.

Die Figuren 1b und 1c zeigen Verhältnisse bei der Gesenkbildung, also mit voluminösem Materialabtrag. Figur 1b ist die Draufsicht auf das Werkstück, Fig. 1c der Schnitt durch das Werkstück. Die mäandernde Kurve 8a stellt die Bewegung des Laserstrahls auf der Werkstückoberfläche dar. Es wird in diesem Zusammenhang darauf verwiesen, dass der Laserstrahl auf der Werkstückoberfläche einen gewissen Durchmesser hat, und mit diesem Durchmesser korreliert auch die Breite (senkrecht zur Bewegungsrichtung in der Ebene der Werkstückoberfläche) der Einwirkung auf die Werkstückoberfläche. Typische Strahldurchmesser liegen im Bereich zwischen 5 und 50 μm. Entsprechend korreliert hierzu sind die Abstände der einzelnen Mäander zueinander. Anstelle eines hin- und herfahrenden Mäanders kann auch beispielsweise eine Spirale eingesteuert werden oder das zeilenweise gleichgerichtete Abfahren von Bearbeitungslinien. Bezugsziffer 9a bezeichnet die Bearbeitungsgrenzen in der jeweiligen Schicht. Innerhalb der Bearbeitungsgrenzen ist der Laserstrahl 5 angeschaltet, außerhalb davon ausgeschaltet, sodass seine Spur in den außerhalb gelegenen Bereichen nur theoretisch existiert.

Innerhalb der Grenzen 9a bewirkt der Laserstrahl den Abtrag, außerhalb nicht. Statt der Abschaltung außerhalb der Bearbeitungsgrenzen kann auch eine starke Defokussierung gewählt werden, sodass der Energieeintrag pro Fläche nicht mehr zur Werkstückbearbeitung ausreicht und der Laser gleichzeitig kontinuierlich arbeitet. Gemäß Fig. 1b wird eine Schicht abgetragen. Es folgt dann anschließend eine weitere Schicht, in der andere Bearbeitungsgrenzen 9a gelten können. Auf diese Weise wird das Gesenk in die Tiefe gebildet, wie dies in Fig. 1c gezeigt ist. 1a definiert den momentanen Gesenkboden, also die momentane Werkstückoberfläche, wie sie in Fig. 1b betrachtet wird. Die horizontal gestrichelten Linien zeigen schematisch die einzelnen abgetragenen Schichten. Die Bearbeitungsgrenzen 9a unterscheiden sich von Schicht zu Schicht, also in Tiefenrichtung (negative z-Richtung), sodass auf diese Weise ein Gesenk mit genau definierter Formgebung entsteht. Es kann sich beispielsweise um den Formenbau oder ähnliches handeln. 1c symbolisiert den Boden des fertigen Gesenks. Er ist noch nicht gefertigt, wird aber im Laufe der Zeit durch das schichtweise flächendeckend abtragende Vorgehen freigelegt.

Figur 1d zeigt eine Vorgehensweise bei der Oberflächenbearbeitung. Es handelt sich um die Draufsicht auf die Werkstückoberfläche. Es können hier eine oder mehrere einzelne Spuren eingesteuert werden. Die Bearbeitung kann, muss aber nicht flächendeckend sein. Es können parallele Spuren 8b, 8c und 8d, 8e vorgesehen sein. Es kann auf diese Weise eine Oberfläche mit bestimmten optischen oder mechanischen Eigenschaften erzeugt werden. Wie in Fig. 1b wird in der Fig. 1d die jeweilige Spur durch die Strahlführung 2 der Fig. 1a eingesteuert. Der Laserstrahl legt dabei auf der Werkstückoberfläche innerhalb einer bestimmten Zeit Δt eine bestimmte Strecke Δx zurück, sodass dementsprechend eine Bahngeschwindigkeit vB des Laserstrahls auf der Werkstückoberfläche als Δx/Δt definiert werden kann. Gängige Bahngeschwindigkeiten sind 100 - 300 mm/s. Sie snd nach oben durch die mit höher werdender Geschwindigkeit fallende Stellgenauigkeit begrenzt.

Figur 1e zeigt die Charakteristik des bearbeitenden Laserstrahls über der Zeit. Gezeigt ist die jeweilige Lichtleistung. Bei konstanter Querschnittsfläche des Laserstrahls entspricht der zeitliche Verlauf also auch dem Leistungseintrag bezogen auf die Fläche. Die Laserstrahlen pulsieren vorzugsweise mit konstanter Periode. Angegeben sind die Pulsspitzen zum Zeitpunkt t1, t2, t3, für die eine konstante Zeitdifferenz tL angenommen ist. Dem entspricht eine Laserimpulsfrequenz fL. Es gilt

$$tL = 1/fL.$$

Typische Laseimpulsfrequenzen fL liegen zwischen 10 kHz und 100 kHz. Allerdings ist in jüngster Zeit eine Tendenz auch hin zu deutlich höheren Impulsfrequenzen fL festzustellen. Es werden inzwischen Bearbeitungslaser mit Impulsfrequenzen um oder über 1 MHz oder um 2 MHz, auch über 5 MHz bis hin zu 100 MHz oder mehr angeboten. Es ist wünschenswert, diese Laser zu verwenden, denn trotz der höheren Impulsfrequenz haben sie doch eine den Abtrag maßgeblich bestimmende Impulsspitzenleistung, die derjenigen niederfrequenterer Laser entspricht oder diese sogar stark überschreitet. Ein Rechenbeispiel sei zur Verdeutlichung angeführt: Eine herkömmliche mittlere Laserleistung von 10W führt bei 80 kHz Impulsfrequenz zu 125 μJ Impulsenergie. Bei einer Impulsdauer von 100 ns ergibt sich eine Impulsspitzenleistung von 1250 W.

In neuen Systemen dagegen können 10W mittlere Laserleistung bei 1 MHz gepulst eingebracht werden. Hier sind die Impulsdauern deutlich kürzer, z. B. 10 ps. Dies führt zu einer Impulsspitzenleistung von 1 MW.

Figur 1f zeigt ein weiteres Zeitdiagramm. Es beschreibt einen Sonderfall der Werkstückbearbeitung mittels pulsierenden Laserstrahls, bei dem dem eigentlichen Arbeitsimpuls ein Erwärmungsimpuls vorgelagert ist. In diesem Fall ist die zu betrachtende Impulsfrequenz zwischen den Arbeitsimpulsen zu messen, wie dies in Fig. 1f dargestellt ist.

Die Strahlführung 2 weist eine bestimmte endliche Stellgeschwindigkeit auf. Zwar kann sie theoretisch sehr schnell betrieben werden. Es leidet dann allerdings die Stellgenauigkeit und damit die Genauigkeit der Oberflächenbearbeitung bzw. Gesenkbildung auf dem Werkstück. Es ergeben sich auf diese Weise Verhältnisse, die Bezug nehmend auf Fig. 1d erläutert werden: Fig. 1g ist die Draufsicht auf die Werkstückoberfläche. 8f bezeichnet die momentane Bahn des Laserstrahls über der Werkstückoberfläche. Abhängig von Bahngeschwindigkeit vB des Laserstrahls auf der Werkstückoberfläche, Strahldurchmesser dS des Laserstrahls auf Werkstückoberflächenniveau und Laserimpulsfrequenz fL kann es zu Überlappungen der Impulse kommen. Nimmt man beispielsweise eine Impulsfrequenz fL von 100 kHz und einen Strahldurchmesser dS von 10 μm an, ergibt sich entsprechend

$$vB = dS/tL = dS \times fL$$

eine Bahngeschwindigkeit vB von 1 m/s, wenn gewünscht wird, dass sich Laserlichtauftreffstellen gerade nicht überlappen. Tatsächlich aber sind heutige Strahlführungen, die in der Regel aus Schwenkspiegeln aufgebaut sind, in ihrer Führungsgeschwindigkeit auf der Werkstückoberfläche auf ca. 500 mm/s oder 1000 mm/s begrenzt. Dies bedeutet, dass sich bei den angenommenen Zahlenwerten schon eine Überlappung von ca. 50 % des Strahldurchmessers dS ergibt. Wenn man nun annimmt, dass ein eintreffender Laserimpuls zur Erwärmung des Materials in der Weise führt, dass es verflüssigt und verdampft (wobei die Flüssigphase sehr schnell durchlaufen werden kann), führt dies jedenfalls dazu, dass der nachfolgende Laserimpuls auf eine Stelle trifft, an der unmittelbar vorher der vorherige Laserimpuls auch schon wirksam war.

Dies führt zu verschiedenen unangenehmen Effekten. Es führt dazu, dass das Werkstück durch Einbringen von zu viel Energie pro Zeit in die gleiche Wirkfläche, die schon vorher von früheren Impulsen getroffen wurde, auch weit jenseits der Laserstrahlbegrenzung, also jenseits des Strahldurchmessers, erwärmt und in einem größeren Bereich verflüssigt wird, was zu einer unerwünschten Erhöhung des Schmelzanteils führt. Dies führt wiederum dazu, dass keine genau definierten Verhältnisse mehr vorliegen, was die Wechselwirkung zwischen Laserstrahl und Werkstückoberfläche angeht. Der Materialabtrag wird dadurch ungleichmäßig und nicht genau vorhersehbar.

Das Problem verschärft sich mit den eingangs genannten steigenden Impulsfrequenzen. Das soeben angegebene Zahlenbeispiel zeigt, dass bei schon vergleichsweise niedrigen Impulsfrequenzen (100 kHz) angesichts der Stellgeschwindigkeiten der Laserstrahlführung 2 Überlappungen auftreten. Dies wird umso mehr der Fall sein, wenn nicht beispielsweise eine Impulsfrequenz von 100 kHz vorliegt, sondern etwa eine von 1 MHz oder mehr bis hinauf zu 100 MHz. Man kann dann in gewisser Weise versuchen, den Laserstrahldurchmesser zu verkleinern oder die Stellgeschwindigkeit zu verbessern. Aber man wird mit der heutigen Technik einer signifikanten Überlappung einzelner Impulse auf der Werkstückoberfläche, wie in Fig. 1g gezeigt, nicht entkommen. Bei hohen Impulsfrequenzen von 500 kHz und mehr muss angenommen werden, dass bei bekannter Technik die Überlappung höher als 50 % des Strahldurchmessers auf der Werkstückoberfläche und wahrscheinlich auch höher als 80 % des Strahldurchmessers wäre. Dies führt dann umso mehr zu den genannten Ungenauigkeiten in der Abtragsleistung.

Weiterer Stand der Technik findet sich in DE102005039833A1, DE102004051180A1, DE10392185T5, EP0536625B1, DE10309157A1 und US5837962.

Die US 2005/0237895 beschreibt eine Vorrichtung für die Laserbeleuchtung eines Werkstücks. Impulsfrequenzen liegen über 100 MHz. Paare von Scangeschwindigkeit und Laserdurchmesser sind 2000 cm/s und 20 μm bzw. 10^7 cm/s und 400 μm.

Die US 2005/0069000 beschreibt eine Lasertrennvorrichtung, die einen Laserfleck von 60 μm Durchmesser als Schneidwerkzeug verwendet.

Aufgabe der Erfindung ist es, ein Verfahren und eine Vorrichtung zur Bildung eines Gesenks anzugeben, die auch bei hoher Impulsfrequenz die stabile und vorhersagbare Steuerung und Einstellung der Abtragsleistung ermöglichen. Diese Aufgabe wird mit den Merkmalen der unabhängigen Ansprüche 1 und 10 gelöst.

Gemäß der Erfindung wird durch geeignete technische Einrichtungen die Bahngeschwindigkeit vB, mit der der Laserstrahl über die Werkstückoberfläche geführt wird, so eingestellt, dass sich angesichts von Laserimpulsfrequenz fL und Strahldurchmesser dS folgende Verhältnisse einstellen:

$$vB > n \times dS \times fL,$$

wobei n ein Anteilsfaktor ist, der 0,2 oder 0,4 oder 0,6 oder 0,8 oder 1 oder größer als 1 sein kann. Wenn sich die Bahngeschwindigkeit im Laufe der Zeit ändert, kann eine mittlere Bahngeschwindigkeit oder die maximale Bahngeschwindigkeit genommen werden. Gleiches gilt für die Laserimpulsfrequenz fL.

Die geeignete Einstellung einer schnellen Bahngeschwindigkeit vB erfolgt in der Weise, dass der von der bekannten Strahlführung 2 bewirkten Bewegung eine schnellere weitere Bewegung mit gegebenenfalls kleinerer Amplitude überlagert wird. Es sind dann zwei Führungen vorgesehen, deren eine die herkömmliche Strahlführung ist, wie sie bezugnehmend auf Fig. 1a beschrieben wurde, und deren andere eine weitere Strahlführung ist, die die überlagerte Führung des Laserstrahls erzeugt.

Eine Vorrichtung zur Werkstückbearbeitung zur Durchführung eines der oben beschriebenen Verfahren ist im Anspruch 10 dargelegt

Das zu bearbeitende Werkstück kann ein metallisches Material oder ein Halbleitermaterial oder eine Keramik oder ein Glas oder ein Kunststoff sein oder aufweisen. Die Bearbeitung kann die Oberflächenbearbeitung sein, um das optische Erscheinungsbild oder die Rauhigkeit einer Oberfläche zu beeinflussen, oder sie kann die Gesenkbildung in der Weise sein, dass schichtweise flächig Material abgetragen wird, um so ein Gesenk mit genau definierten Seitenwänden und einem genau definierten Boden zu schaffen. Bei der Gesenkbildung können die Genauigkeiten besser als 100 pm, vorzugsweise besser als 50 oder 10 $\mu$m Fertigungsgenauigkeit sein.

Jeder der Impulse für sich kann ausreichend energiereich für das Schmelzen oder Verdampfen des Materials an der Auftreffstelle sein. Bei der Ausführungsform der Fig. 1f gilt dies für die eigentlichen Arbeitsimpulse, nicht notwendigerweise für die vorgelagerten Erwärmungsimpulse.

Nachfolgend werden bezugnehmend auf die Zeichnungen einzelne Ausführungsformen der Erfindung beschrieben. Es zeigen

Fig. 1 Darstellungen zum Stand der Technik,

Fig. 2 eine Darstellung zur Erläuterung des Effekts der Erfindung,

Fig. 3 erfindungsgemäße Ausführungsformen,

Fig. 4 eine weitere erfindungsgemäße Ausführungsform, und

Fig. 5 eine erfindungsgemäße Vorrichtung.

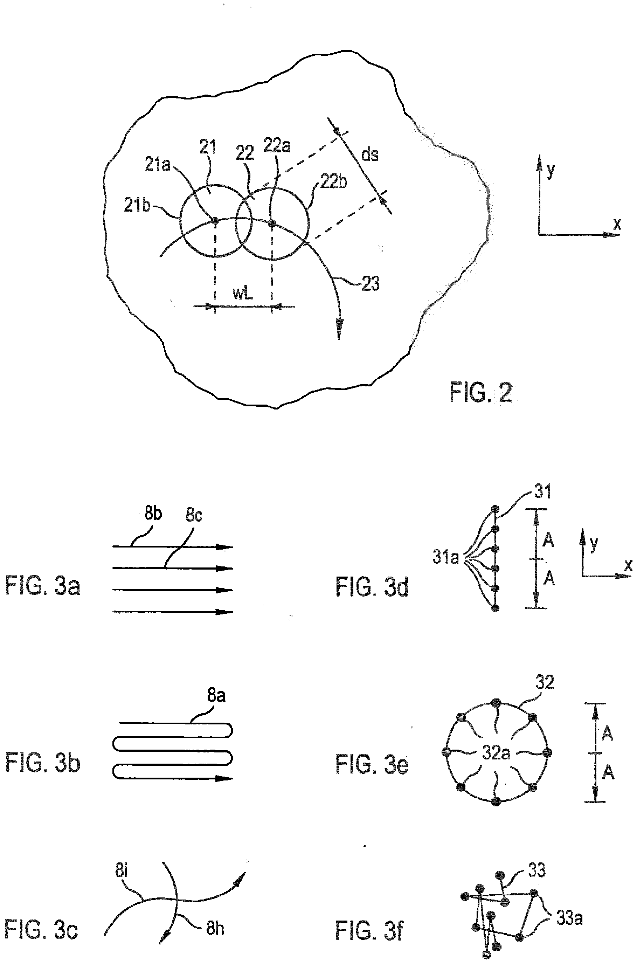

Figur 2 zeigt die Verhältnisse nach der Erfindung. Bezugsziffer 8g zeigt die momentane Bahn des Laserstrahls. Sie kann gekrümmt sein. 21 und 22 sind zwei aufeinanderfolgende Auftreffstellen zweier aufeinanderfolgender Arbeitsimpulse des Laserlichts. Ihre gedachten, idealen Mittelpunkte sind jeweils die Punkte 21a und 22a. Die Kreise 21b und 22b bezeichnen jeweils den Durchmesser des Laserlichtstrahls. Die Strecke wL zwischen den zwei Mittelpunkten 21a und 22a ist die Strecke, die der Laserstrahl zwischen zwei Arbeitsimpulsen zurücklegt. Die Verhältnisse sind so eingestellt, dass die Überlappung kleiner ist als ein vorbestimmter Wert, insbesondere kleiner als 30 % oder 50 %. Allgemein können die Verhältnisse durch die Formel

$$vB > n \times dS \times fL$$

beschrieben werden, wobei vB die Bahngeschwindigkeit des pulsierenden Laserstrahls auf der Werkstückoberfläche, dS der Strahldurchmesser auf Werkstückoberflächenniveau und fL die Impulsfrequenz der Arbeitsimpulse des pulsierenden Laserlichts sind. Die Impulsfrequenz kann dabei größer als 100 kHz, vorzugsweise größer 1 MHz und weiter vorzugsweise größer 10 MHz sein. Der Wert n ist ein Anteilsfaktor, der 0,2 oder 0,4 oder 0,6 oder 0,8 oder auch 1 oder größer als 1 sein kann. Die Überlappung (entsprechend dem Anteilsfaktor n) kann entsprechend der gewünschten Verhältnisse eingestellt werden.

Die Bahngeschwindigkeit wird als diejenige Geschwindigkeit ermittelt, die sich ergibt, wenn man den zwischen zwei Impulsen zurückgelegten Weg (wL) durch die für die Strecke benötigte Zeit (entsprechend tL = 1/fL) teilt. Bei veränderlichen Geschwindigkeiten kann ein Mittelwert genommen werden oder jeweils ein Momentanwert zusammen mit Momentanwerten der jeweils anderen Größen.

Die geforderte Bahngeschwindigkeit kann erzeugt werden, indem eine der herkömlichen Führung überlagerte Führungsbewegung generiert wird. Der Laserstrahl kann einerseits durch die herkömmliche Strahlführung geführt werden und andererseits durch eine weitere Strahlführung, die eine schnellere Bewegung erzeugt. Die herkömmliche Strahlführung (Bezugsziffer 2 in Fig. 1a) kann dabei eine größere Amplitude (maximale Auslenkung) haben als die erfindungsgemäß hinzugenommene Strahlführung. Die hinzugenommene Strahlführung kann eine Auslenkung erzeugen, die eine Komponente quer zu der von der herkömmlichen Strahlführung 2 erzeugten Bewegung hat. Die zusätzliche Führung kann eine Hin- und Herbewegung oder auch eine überlagerte Bewegung in beiden Dimensionen der Werkstückoberfläche einsteuern. Ihre Amplitude kann kleiner sein als diejenige der maximalen Auslenkung der herkömmlichen Strahlführung. Soweit eine Hin- und Herbewegung bzw. eine in gewisser Weise periodische Bewegung durch die hinzugekommene Strahlführung erzeugt wird, kann deren Frequenz ein Bruchteil der Frequenz der Laserarbeitsimpulse sein, beispielsweise mehr als 5 % oder mehr als 10 % oder 1/n (n = ganze Zal) der Laserimpulsfrequenz. Pro Periode der zusätzlichen Bewegung erfolgen dann mehrere Arbeitsimpulse des Laserstrahls.

Figur 3 zeigt, wie die gewünschte Bewegung in verschiedenen Ausführungsformen erzeugt werden kann. Die Bewegungsmuster der Fig. 3 sind Darstellungen von Laserstrahlführungen in der Werkstückoberflächenebene, also in der x-/y-Ebene.

Die Figuren 3a, 3b und 3c zeigen Strahlführungen, wie sie durch die herkömmliche Strahlführung erzeugt werden können. Figur 3a entspricht dabei zumindest bereichsweise der Strahlführung der Fig. 1d, Fig. 3b entspricht der Strahlführung der Fig. 1b. Figur 3c zeigt zwei definierte Bahnen 8h und 8i, die nacheinander durch die herkömmliche Strahlführung eingestellt werden und die sich auch kreuzen können.

Die Figuren 3d, 3e und 3f zeigen Bewegungsmuster, die durch eine weitere Strahlführung eingestellt werden können und die der durch die herkömmliche Strahlführung erzeugten Bewegung überlagert werden können. Muster 31 zeigt eine vertikale Auf- und Abbewegung, während derer bei einem Durchlauf mehrere Laserimpulse stattfinden können. Wenn beispielsweise während einer Periode der Bewegung der Fig. 3d zehn (allgemein: n) Arbeitsimpulse stattfinden sollen, wäre die Periodizität der Bewegung ein Zehntel (allgemein: 1/n) der Laserimpulsfrequenz. Die Auslenkung 2a (doppelte Amplitude A) kann nach Maßgabe des Strahldurchmessers dS gewählt werden. Sie kann ein Mehrfaches des Laserstrahldurchmessers sein, beispielsweise mehr als das Zweifache, mehr als das Zehnfache oder mehr als das 50-fache. Andererseits kann die Auslenkung 2a weniger als das Zehnfache oder auch weniger als das Fünffache des Laserstrahldurchmessers dS auf Werkstückniveau sein. Allgemein kann der technisch mögliche Auslenkungsbereich der zweiten Führung genutzt werden. Bei +/-1° und z. B. 200 mm Weglänge ergibt sich eine Auslenkung von fast 7 mm. Um Randeffekte zu vermeiden, können Extrema in der Einsteuerung vermieden werden.

Figur 3e zeigt ein anderes Muster. Dort wird eine Kreisbewegung eingesteuert, die der herkömmlichen Bewegung überlagert wird. Während eines Umlaufs finden mehrere Bearbeitungsimpulse statt. Überlegungen zur Periodizität sind die gleichen wie hinsichtlich Fig. 3d.

Die Bewegung der Fig. 3d kann in der Weise abänderbar sein, dass sich die Schwingungsrichtung ändert. Sie kann beispielsweise so sein, dass mindestens immer ein bestimmter Mindestwinkel (z. B. 20° oder 40°) zu der Bewegungsrichtung verbleibt, die durch die herkömmliche Strahlführung eingesteuert wird. So kann beispielsweise zwischen einer vertikalen Schwingung (Fig. 3d) und einer dagegen um 90° verdrehten horizontalen Schwingung umgeschaltet werden. Figur 3f zeigt eine Ausführungsform, bei der die überlagerte Strahlführung zufällig oder quasizufällig ist. Sie kann Bewegungskomponenten in Führungsrichtung der herkömmlichen Strahlführung und senkrecht dazu haben. Beispielsweise können in einem rechtwinkligen oder quadratischen Raster die einzelnen Positionen quasi zufällig, aber doch in vorbestimmter Weise, angefahren werden, bis alle Positionen des Rasters einmal erreicht wurden. Dann wiederholt sich das Muster.

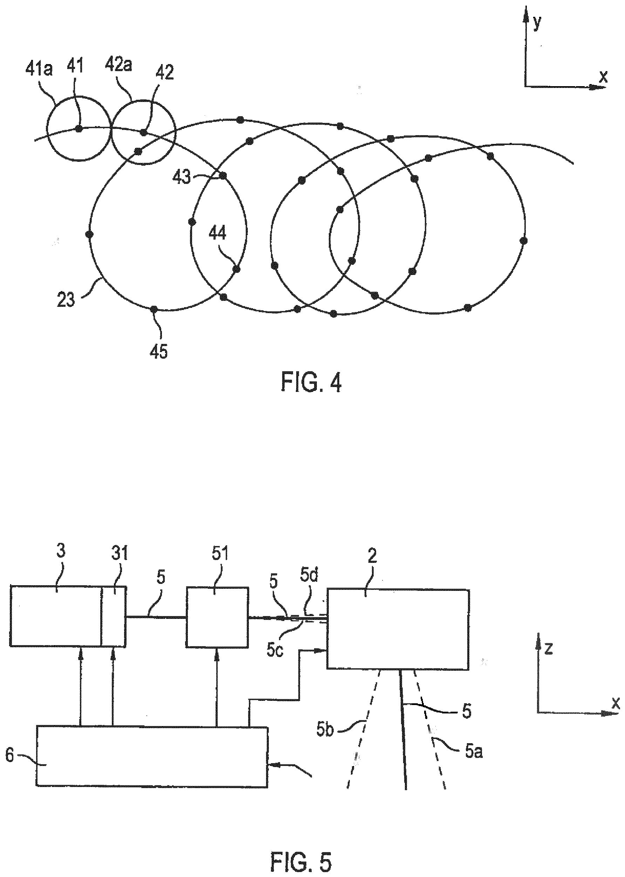

Figur 4 zeigt das Ergebnis der Überlagerung beispielsweise der herkömmlichen Führung beispielsweise entsprechend einer Linie der Fig. 3a (z.B. Linie 8b) und der kreisförmigen zusätzlichen Führung der Fig. 3e. Es ergibt sich eine verzogene Spirale. 23 markiert die Bahn, längs derer der Laserstrahl aufgrund der überlagerten Bewegungen geführt wird. Die dicken Punkte 41, 42, 43, 44, 45, ... markieren die Mittelpunkte der Auftreffpositionen der einzelnen Arbeitsimpulse des Laserlichts. Zu den Mittelpunkten 41 und 42 sind noch die jeweiligen Laserstrahldurchmesser 41a, 42a gezeichnet. Die Zeichnung ist so, dass die einzelnen Auftreffstellen aufeinanderfolgender Impulse gerade aneinanderstoßen. Die Dimensionierung kann aber auch so sein, dass sie stärker überlappen oder weiter als gezeichnet voneinander beabstandet sind. Dies kann, bei konstanter Arbeitslaserimpulsfrequenz fL und gegebener herkömmlicher Führung einerseits durch Umlauffrequenzsteuerung in Bezug auf die Laserimpulsfrequenz fL und andererseits durch Amplitudensteuerung der überlagerten Bewegung erreicht werden.

Die überlagerte Bewegung ist in ihrer eigenen Bahngeschwindigkeit in der Regel deutlich höher als diejenige der von der herkömmlichen Führung angesteuerten Bewegung. Allerdings ist in der Regel auch die Amplitude (maximal möliche Auslenkung) kleiner. Die überlagerte Bewegung kann so sein, dass bei einem Durchlauf über die Fläche eine bestimmte Stelle auf dem Werkstück zweifach oder mehrfach von einem Laserstrahl getroffen wird. Andererseits können die Parameter auch so eingestellt werden, dass auch mit der überlagerten Bewegung beim Überstreichen der Oberfläche eine zuverlässige flächendeckende und nur einmalige Überstreichung aller Stellen der zu bearbeitenden Werkstückoberfläche erreicht wird. Dies kann beispielsweise dadurch geschehen, dass Auslenkungsamplitude, Schrittweite und Frequenz der überlagerten Bewegung geeignet gewählt werden.

Allgemein kann das Ergebnis der überlagerten Führung sein, dass makroskopisch betrachtet die Führung der herkömmlichen Führung insoweit ähnelt, als die große Bewegung über das Werkstück von der herkömmlichen Führung in konventioneller Weise vorgegeben wird. Aber die gezogenen Bahnen können wegen der zusätzlichen seitlichen Auslenkung breiter sein, so dass breitere Spuren aus vielen mehr oder minder nebeneinanderliegenden Arbeitsstellen als mit der bekannten Technik gezogen werden. Dementsprechend kann die konventionelle Führung weiter beabstandete Spuren einsteuern.

Figur 5 zeigt schematisch eine erfindungsgemäße Bearbeitungsvorrichtung. Gleiche Bezugsziffern wie in Fig. 1a zeigen gleiche Komponenten. 5a und 5b bezeichnen gestrichelt die maximal möglichen Auslenkungen des Laserstrahls 5, die durch die Strahlführung 2 hervorgerufen werden können. Auf der Werkstückoberfläche definieren sie dementsprechend ein Arbeitsfenster.

Es ist eine weitere Strahlführung 51 vorgesehen, die im Strahlengang vor der herkömmlichen Strahlführung 2 liegen kann. Auch sie erzeugt eine winkelmäßige Auslenkung des Laserstrahls, die maximal durch die gestrichelten Linien 5c und 5d begrenzt ist. Der maximal mögliche Verstellwinkel kann entsprechend der kleineren Amplitude der zusätzlichen Strahlführungseinrichtung 51 kleiner sein als derjenige der herkömmlichen Strahlführung 2. Die zusätzliche Strahlführung 51 kann aber auch einheitlich mit der herkömmlichen Strahlführung 2 vorgesehen sein, beispielsweise indem Spiegel der herkömmlichen Strahlführungsvorrichtung in sich nochmals verstellbar sind, oder ähnliches. Auch die zusätzliche zweite Führungseinrichtung 51 kann von der Steuerung/Regelung 6 angesteuert werden. Je nach Bedarf kann sie separat einschaltbar und ausschaltbar sein, so dass sie wahlweise zur herkömmlichen Führung hinzugenommen werden kann.

Die Ansteuersignale an die zweite Führungseinrichtung 51 werden so erzeugt, dass sich die jeweils gewünschten Führungsmuster ergeben, insbesondere eines derjenigen der Figuren 3d, 3e oder 3f. Die zweite Führung kann eine Auslenkung des Laserstrahls in beiden Dimensionen der Oberfläche des Werkstücks (x, y) bewirken. In einer anderen Ausführungsform kann aber auch nur eine eindimensionale Auslenkung einstellbar sein.

Die zweite Führung 51 kann ein oder mehrere akustooptische Elemente oder elektrooptische Elemente aufweisen, die beispielsweise die Auslenkung nach Maßgabe der Frequenz eines angelegen akustischen oder elektrischen Signals bestimmen. Sie kann auch ein oder mehrere piezoelektrisches Elemente aufweisen. Es kann sich auch um ein mechanisch oszillierendes Element handeln, beispielsweise eine sich im Strahlengang befindende, sich drehende durchlässige oder reflektierende Scheibe mit unterschiedlichen Richtungseigenschaften. Um eine Auslenkung längs zweier Dimensionen (entsprechend x und y auf der Werkstückoberfläche) zu bewirken, können ggf. sich in ihrer Wirkrichtung kreuzende Elemente vorgesehen sein.

Wenn die zweite Führung periodisch arbeitet, kann ihre Arbeitsperiode auf die Laserimpulsfrequenz fL abgestimmt sein, beispielsweise in der Weise, dass die Arbeitsfrequenz der zweiten Führung ein vorzugsweise ganzzahliger Bruchteil der Laserimpulsfrequenz fL ist. Andererseits kann auch eine genaue Abstimmung der Frequenzen bzw. Periodendauern in der Weise vorgesehen sein, dass für die Periodendauer T2 der zweiten Führung gilt:

$$1/f2 = T2 = n * tL + tR$$

wobei n die Anzahl der Arbeitsimpulse pro Periode der zweiten Führung und tR eine für Rücklauf der zweiten Führung und sonstige Auszeiten benötigte Zeitdauer ist.

Die Führungsrichtung der zweiten Führung kann fest in eine Richtung (reziprogierend) sein. Diese eine Richtung kann allerdings zeitveränderlich sein. Es kann aber auch systematisch die Auslenkung des Arbeitslaserstrahls in der Weise erfolgen, dass er auf der Werkstückoberfläche in deren zwei Dimensionen (x, y) ausgelenkt wird. Die Auslenkung kann so einstellbar sein, dass sie immer eine bestimmte Winkelbeziehung zur momentanen Bewegungsrichtung hat, die durch die erste Führung erzeugt wird, beispielsweise indem sie dazu gleichgerichtet ist oder indem sie rechtwinklig dazu ist oder einen bestimmten Winkelbereich einhält.

Die Erfindung eignet sich sowohl für die Oberflächenbearbeitung als auch für die Gesenkbildung. Bei der Oberflächenbearbeitung kann das einmalige Überstreichen aller zu bearbeitenden Oberflächenbereiche ausreichen. Bei der Gesenkbildung werden bestimmte Bereiche in der x-y-Ebene in der Regel mehrfach überstrichen, wobei jedes Mal Material einer gewissen Dicke entfernt wird. Durch die Vielzahl der abgetragenen Schichten arbeitet man sich dann im Gesenk allmählich in die Tiefe.

Die Schichtdicken bzw. Einwirktiefen pro Impuls können dabei 10 μm, vorzugsweise unter 2 oder 1 pm, weiter vorzugsweise unter 0,25 μm liegen.

Die Untergrenze der von der ersten Führung alleine hervorgerufenen Bahngeschwindigkeit kann 20 oder 50 oder 100 mm/s sein. Deren Obergrenze kann 100 mm/s oder 200 mm/s oder 500 mm/s sein.

Betrachtete Laserstrahldurchmesser auf der Höhe der Werkstückoberfläche können als Obergrenze 50 μm oder 20 μm haben und als Untergrenze 2 μm oder 5 μm oder 10 μm.

Die Amplitude der von der zweiten Führung hervorgerufenen Auslenkung kann nach oben auf 2 mm oder auf 1 mm oder auf 50 μm begrenzt sein. Sie kann nach oben auch auf das 200-fache oder 100-fache oder 50-fache des Durchmessers des Laserstrahls auf der Werkstückoberfläche begrenzt sein. Nach unten kann die Amplitude auf 5 μm oder 10 μm oder auch auf das Doppelte des Durchmessers des Laserstrahls auf der Werkstückoberfläche begrenzt sein.

Die Frequenz f2 der zweiten Führung (Kehrwert der Periodendauer t2) kann größer als das n-fache der Laserperiode tL sein, wobei n 3 oder 5 oder 7 sein kann.

Bei der Einsteuerung der Strahlführung durch die zweite Führung kann auch eine Verfolgung der Arbeitspositionen dahingehend vorgenommen werden, dass die tatsächlichen Arbeitspositionen des Laserstrahls (hervorgerufen durch die Effekte der ersten und der zweiten Führung) verfolgt und aufgezeichnet werden und dass nach Maßgabe dieser Aufzeichnungen weitere Ansteuerungen der zweiten Führung vorgenommen werden, insbesondere um solche Bereiche zu "treffen", die bisher noch nicht getroffen worden sind. Dementsprechend kann eine Erfassungseinrichtung für die schon bearbeitenden Positionen auf der Werkstückoberfläche vorgesehen sein und ein Speicher, um das Ergebnis der Erfassung zu speichern und für die nachfolgende Auswertung vorzuhalten. Der Durchmesser des Laserstrahls auf der Werkstückoberfläche kann bestimmt werden, indem man, wenn der Querschnitt nicht klar umrissen ist, zur Durchmesserbestimmung auf einen Intensitätsgrenzwert im Vergleich zur Mittenintensität abstellt, z. B. auf 50% oder auf einen Wert 1/e oder $1/e^2$ der Mittenintensität. Es kann ISO 11146 berücksichtigt werden.

**Patentansprüche**

1. Verfahren zur Bildung eines Gesenks in einem Werkstück, bei dem ein mit einer Impulsfrequenz fL pulsierender Laserstrahl mittels einer Strahlführung über die Werkstückoberfläche geführt wird, bei dem der Laserstrahl so geführt wird, dass seine Bahngeschwindigkeit vB auf der Werkstückoberfläche die folgende Bedingung erfüllt:

$$vB > n * dS * fL$$

wobei n ein Anteilsfaktor ist, der 0,2 oder 0,4 oder 0,6 oder 0,8 oder 1 oder größer sein kann, dS der Strahldurchmesser auf Werkstückniveau ist, und wobei die Impulsfrequenz größer als 100 kHz ist, wobei die Laserstrahlführung eine erste im Strahlengang des Laserstrahls liegende Führung umfasst, die für sich eine Laserstrahlführung mit einer ersten Bahngeschwindigkeit bewirkt, **dadurch gekennzeichnet, daß** die Laserstrahlführung eine gleichzeitig mit der ersten Führung arbeitende zweite im Strahlengang des Laserstrahls liegende Führung umfasst, die für sich eine Laserstrahlführung mit einer zweiten Bahngeschwindigkeit bewirkt, die höher als die erste Bahngeschwindigkeit ist.

2. Verfahren nach Anspruch 1, **dadurch gekennzeichnet, daß** die Amplitude der ersten Führung größer als diejenige der zweiten Führung ist.

3. Verfahren nach Anspruch 1 oder 2, **dadurch gekennzeichnet, daß** die erste Führung und/oder die zweite Führung eine Laserstrahlbewegung längs zweier Dimensionen auf der Werkstückoberfläche bewirken.

4. Verfahren nach einem der Ansprüche 1 bis 3, **dadurch gekennzeichnet, daß** in Laserlichtausbreitungsrichtung betrachtet zuerst die zweite und dann die erste Führung den Laserstrahl beeinflusst.

5. Verfahren nach einem der Ansprüche 1 bis 4, **dadurch gekennzeichnet, daß** die zweite Führung elektrooptisch, akustooptisch oder piezoelektrisch erfolgt.

6. Verfahren nach einem der Ansprüche 1 bis 5, **dadurch gekennzeichnet, daß** die zweite Führung den Laserstrahl zufallsbestimmt führt.

7. Verfahren nach einem der vorherigen Ansprüche, **dadurch gekennzeichnet, daß** die zweite Führung den Laserstrahl in einer Richtung führt, die von der Führungsrichtung der ersten Führung abweicht.

8. Verfahren nach einem der Ansprüche 1 bis 7, **dadurch gekennzeichnet, daß** erste und zweite Führung sich überlagern.

9. Verfahren nach einem der vorherigen Ansprüche, **dadurch gekennzeichnet, daß** jeder Impuls des pulsierender Laserstrahls für den Materialabtrag geeignet ist.

10. Vorrichtung zur Gesenkbildung in einem Werkstück, insbesondere zur Durchführung des Verfahren nach Anspruch 1, mit einer Laserlichtquelle (3) zur Erzeugung eines pulsierenden Laserstrahls (5), und einer Strahlführung (2) zur Führung des Laserstrahls über die Werkstückoberfläche, wobei die Laserlichtquelle den Laserstrahl mit einer Impulsfrequenz von mindestens 100 kHz erzeugt, die Strahlführung den Laserstrahl so führt, dass seine Bahngeschwindigkeit vB auf der Werkstückoberfläche die folgende Bedingung erfüllt:

$$vB > n * dS * fL$$

wobei n ein Anteilsfaktor ist, der 0,2 oder 0,4 oder 0,6 oder 0,8 oder 1 oder größer sein kann, dS der Strahldurchmesser auf Werkstückniveau ist und fL die Impulsfrequenz der Arbeitsimpulse des Laserstrahls ist,
wobei die Strahlführung eine erste im Strahlengang des Laserstrahls liegende Führungseinrichtung aufweist, die für sich eine Laserstrahlführung mit einer ersten Bahngeschwindigkeit bewirkt,
**dadurch gekennzeichnet, daß**
die Strahlführung eine gleichzeitig mit der ersten Führungseinrichtung betreibbare zweite im Strahlengang des Laserstrahls liegende Führungseinrichtung aufweist, die für sich eine Laserstrahlführung mit einer zweiten Bahngeschwindigkeit bewirkt, die höher ist als die erste Bahngeschwindigkeit.

11. Vorrichtung nach Anspruch 10, **dadurch gekennzeichnet, daß** die zweite Führungseinrichtung eines oder mehrere der folgenden Elemente aufweist:

ein elektrooptisches Element,
ein akusto-optisches Element,
ein translatorisch oder rotatorisch verstellbares optisches Element.

12. Vorrichtung nach Anspruch 10 oder 11, **dadurch gekennzeichnet, daß** die erste Führungseinrichtung im Strahlengang hinter der zweiten Führungseinrichtung liegt.

**Claims**

1. Method for forming a depression in a workpiece, in which a laser beam pulsating at a pulse frequency fL is guided over the surface of the workpiece by means of a beam guide,

in which
the laser beam is guided so that its track speed vB on the workpiece surface fulfils the following condition:

$$vB > n * dS * fL$$

where n is a proportional factor, which may be 0.2 or 0.4 or 0.6 or 0.8 or 1 or greater, dS is the beam diameter at workpiece level, and where the pulse frequency is greater than 100 kHz, wherein the laser beam guide comprises a first guide located in the beam path of the laser beam, which in itself causes the laser beam to be guided at a first track speed,
**characterised in that**
the laser beam guide comprises a second guide operating simultaneously with the first guide and located in the beam path of the laser beam, which in itself causes the laser beam to travel at a second track speed that is higher than the first track speed.

2. Method according to claim 1, **characterized in that** the amplitude of the first guide is greater than that of the second guide.

3. Method according to claim 1 or 2, **characterized in that** the first guide and/or the second guide cause a laser beam movement along two dimensions on the surface of the workpiece.

4. Method according to one of claims 1 to 3, **characterised in that**, viewed in the laser light propagation direction, first the second and then the first guide influences the laser beam.

5. Method according to one of claims 1 to 4, **characterised in that** the second guide is electro-optical, acousto-optical or piezoelectric.

6. Method according to one of the claims 1 to 5, **characterised in that** the second guide guides the laser beam at random.

7. Method according to one of the preceding claims, **characterized in that** the second guide guides the laser beam in a direction which deviates from the guiding direction of the first guide.

8. Method according to one of the claims 1 to 7, **characterized in that** the first and second guide are superimposed.

9. Method according to one of the preceding claims, **characterized in that** each pulse of the pulsating laser beam is adapted for removal of material.

10. Apparatus for forming a depression in a workpiece, in particular for carrying out the process according to claim 1, comprising

a laser light source (3) for generating a pulsating laser beam (5), and
a beam guide (2) for guiding the laser beam over the workpiece surface,
wherein
the laser light source generates the laser beam with an impulse frequency of at least 100 kHz, the beam guide guides the laser beam so that its track speed vB on the workpiece surface fulfils the following condition:

$$vB > n * dS * fL,$$

where n is a proportional factor, which may be 0.2 or 0.4 or 0.6 or 0.8 or 1 or greater, dS is the beam diameter at workpiece level, and fL is the pulse frequency of the working pulses of the laser beam,

wherein the beam guide comprises a first guide device located in the beam path of the laser beam, which in itself causes the laser beam to be guide at a first track speed, **characterised in that**

the beam guide comprises a second guide device adapted to be operated simultaneously with the first guide device, which is located in the beam path of the laser beam and which in itself causes the laser beam to be guided at a second track speed which is higher than the first track speed.

11. Apparatus according to claim 10, **characterised in that** the second guide device comprises one or more of the following elements:

an electro-optical element,
an acousto-optical element,
a translatory or rotatory adjustable optical element.

12. Apparatus according to claim 10 or 11, **characterised in that** the first guide device is located behind the second guide device in the beam path.


**Revendications**

1. Procédé pour former une empreinte dans une pièce d'œuvre, dans lequel un faisceau laser pulsé avec une fréquence d'impulsion fL est guidé sur la surface de la pièce d'œuvre au moyen d'un guide de faisceau, dans lequel le faisceau laser est guidé de telle manière que sa vitesse de trajectoire vB sur la surface de la pièce d'œuvre satisfasse à la condition suivante :

$$vB > n * dS * fL$$

où n est un facteur proportionnel, qui peut être de 0,2 ou 0,4 ou 0,6 ou 0,8 ou 1 ou plus, dS est le diamètre du faisceau au niveau de la pièce d'œuvre, et où la fréquence des impulsions est supérieure à 100 kHz,

dans lequel le guide de faisceau laser comprend un premier guide se trouvant dans le trajet du faisceau laser, qui en soi effectue le guidage du faisceau laser avec une première vitesse de trajectoire,
**caractérisé en ce que**

le guide du faisceau laser comprend un deuxième guide qui est susceptible de fonctionner simultanément avec le premier guide et qui est situé dans le trajet du faisceau laser, et qui en soi effectue un guidage du faisceau laser avec une deuxième vitesse de trajectoire qui est supérieure à la première vitesse de trajectoire.

2. Procédé selon la revendication 1, **caractérisée en ce que** l'amplitude du premier guide est supérieure à celle du deuxième guide.

3. Procédé selon la revendication 1 ou 2, **caractérisé en ce que** le premier guide et/ou le deuxième guide provoquent un déplacement du faisceau laser le long de deux dimensions sur la surface de la pièce d'œuvre.

4. Procédé selon l'une des revendications 1 à 3, **caractérisé en ce que**, vu dans la direction de propagation du faisceau laser, le faisceau laser est d'abord influencé par le deuxième guide, puis par le premier.

5. Procédé selon l'une des revendications 1 à 4, **caractérisé en ce que** le deuxième guide est électro-optique, acousto-optique ou piézoélectrique.

6. Procédé selon l'une des revendications 1 à 5, **caractérisée en ce que** le deuxième guide dirige le faisceau laser de manière aléatoire.

7. Procédé selon l'une des revendications précédentes, **caractérisée en ce que** le deuxième guide dirige le faisceau laser dans une direction qui est différente de la direction de guidage du premier guide.

8. Procédé selon l'une des revendications 1 à 7, **caractérisée en ce que** le premier et le deuxième guide sont superposés l'un à l'autre.

9. Procédé selon l'une des revendications précédentes, **caractérisée en ce que** chaque impulsion du faisceau laser pulsé est appropriée à l'enlèvement de matériau.

10. Dispositif pour former une empreinte dans une pièce d'œuvre, notamment pour mettre en œuvre le procédé selon la revendication 1, comprenant

une source de lumière laser (3) pour générer un faisceau laser pulsé (5), et
un guide de faisceau (2) pour guider le faisceau laser sur la surface de la pièce,
dans lequel
la source de lumière laser génère le faisceau laser avec une fréquence d'impulsion d'au moins 100 kHz,
le guide dirige le faisceau laser de telle manière que sa vitesse de trajectoire vB sur la surface de la pièce remplisse à la condition suivante :

$$vB > n * dS * fL$$

où n est un facteur proportionnel qui peut être de 0,2 ou 0,4 ou 0,6 ou 0,8 ou 1 ou plus, dS est le diamètre du faisceau au niveau de la pièce et fL est la fréquence des impulsions de travail du faisceau laser,
dans lequel le guide de faisceau comprend un premier dispositif de guidage situé dans le trajet du faisceau laser, qui en soi effectue le guidage du faisceau laser à une première vitesse de trajectoire,
**caractérisé en ce que**
le guide de faisceau comporte un deuxième dispositif de guidage, qui est susceptible de fonctionner simultanément avec le premier dispositif de guidage et qui est situé dans le trajet du faisceau laser, et qui en soi effectue le guidage du faisceau laser à une deuxième vitesse de trajectoire qui est supérieure à la première vitesse de trajectoire.

**11.** Dispositif selon la revendication 10, **caractérisé en ce que** le deuxième dispositif de guidage comprend un ou plusieurs des éléments suivants :

un élément électro-optique,
un élément acousto-optique,
un élément optique réglable en translation ou en rotation.

**12.** Dispositif selon la revendication 10 ou 11, **caractérisé en ce que** le premier dispositif de guidage se trouve en aval du deuxième dispositif de guidage dans le trajet du faisceau.

FIG. 1a

FIG. 1b

FIG. 1c

FIG. 1d

FIG. 1e

FIG. 1f

FIG. 1g

FIG. 2

FIG. 3a

FIG. 3b

FIG. 3c

FIG. 3d

FIG. 3e

FIG. 3f

FIG. 4

FIG. 5

**IN DER BESCHREIBUNG AUFGEFÜHRTE DOKUMENTE**

**In der Beschreibung aufgeführte Patentdokumente**

- WO 2004105996 A
- DE 102005039833 A1
- DE 102004051180 A1
- DE 10392185T5
- EP 0536625 B1
- DE 10309157 A1
- US 5837962 A
- US 20050237895 A
- US 20050069000 A